# EUROPÄISCHE PATENTSCHRIFT

(11) **EP 1 186 460 B1**
(45) Veröffentlichungstag und Bekanntmachung des Hinweises auf die Patenterteilung: **07.12.2005**
(21) Anmeldenummer: 01121309.7
(22) Anmeldetag: 06.09.2001
(51) Int. Cl.: B60K 37/06, B60K 35/00

(54) **Multimediaeinheit und Verfahren zum Betrieb einer Multimediaeinheit**
Multimedia control system and method for using a multimedia system
Système de commande multimedia et méthode d'utilisation de ce système

(30) Priorität: 11.09.2000 DE 10044819
(43) Veröffentlichungstag der Anmeldung: 13.03.2002
(73) Patentinhaber: Volkswagen AG, 38436 Wolfsburg (DE)
(72) Erfinder: Hallas, Ernst, Dr., 91301 Forchheim (DE)
(74) Vertreter: Meyer, Enno

(56) Entgegenhaltungen:
- EP-A- 1 122 519
- WO-A-98/13224
- DE-A- 3 346 370
- DE-A- 19 739 357

## Beschreibung

Die Anmeldung betrifft ein Verfahren und eine Vorrichtung zur Bedienung einer Multimediaeinheit in einem Kraftfahrzeug gemäß dem Oberbegriff der Ansprüche 1 und 6.

Heutige Multimediakonzepte weisen in ihrer Bedienung und ihren Bedieneinheiten gerätespezifische Bedienungen vor. So wird beispielsweise das Radio über Funktionstasten am Lenkrad oder aber am Gerät selbst bedient. Für einen Nutzer ist die Bedienung zumeist verwirrend und unübersichtlich.

Fortschrittlichere Bedienkonzepte weisen die Struktur auf, daß über eine Menüauswahl die Funktionseinheit "Autoradio" ausgewählt werden kann und über Untermenüpunkte anschließend sämtliche weitere Funktionseinstellungen vorhanden sind.

Aus DE-A-197 37 732 ist eine Vorrichtung zur Steuerung der Funktionen eines Autoradios, welches eine Steuereinheit aufweist, bekannt. Diese Steuereinheit liefert in Ansprache auf mittels einer Bedieneinheit eingegebene Bedienbefehle Steuersignale an Funktionseinheiten des Autoradios. Die Steuereinheit erzeugt die Steuersignale aufgrund eines vorgegebenen fahrzeugspezifischen Kennlinienfeldes. Im weiteren ist die Steuereinheit mit einer Speichereinheit und mit Fahrzeugzustandsdetektoren verbunden. Die Steuereinheit generiert Steuersignale zur Einstellungen der Funktionseinheiten anhand von in der Speichereinheit abgespeicherten Kennlinienfeldern, welche einen Zusammenhang zwischen den Fahrzeugzuständen und den Einstellungen der Funktionseinheiten darstellen. Die Steuereinheit erzeugt Steuersignale zur Einstellung der Funktionseinheiten, in Abhängigkeit von den Ausgangssignalen der Fahrzeugzustandsdetektoren mittels des in der Speichereinheit abgelegten Kennlinienfelder.

Aus EP 0891066 A2 ist ein adaptives Menü gesteuertes Man-Machine Interface bekannt. In einem elektronischen Gerät, wie etwa einem mobilen Funktelefon, welches mit einem kleinen Display ausgestattet ist, ist einem Menüdarstellung vorhanden, über welche die am meisten genutzten Funktionen auswählbar sind. Bei dieser Menüdarstellung kann ein Nutzer seine meist genutzten Funktionen zusammenstellen oder die Einheit selbst stellt die von einem Nutzer häufigst benutzen Funktionen zusammen. Dieses Menü ist an einem der höheren Menüpunkte in der Menüstruktur angeordnet, so daß dieser Menüpunkt schnell und einfach auswählbar ist.

Aus DE 195 29 571 A1 ist ein Verfahren zum Bedienen eines elektrischen Gerätes, insbesondere in einem Kraftfahrzeug, mit einem oder mehreren Bedienelementen bekannt, denen jeweils eine oder mehrere Funktionen zugeordnet sind. Es ist eine Steuereinheit angeordnet, über welche eine Annäherung an das Bedienelement erkannt wird. Außerdem ist die Steuereinheit mit einer Ausgabeeinheit verbunden, welche bei einer Annäherung an die Bedieneinheit die diesem Bedienelement zugeordnete Funktion darstellt. Die Ausgabe kann über eine Sprachausgabe oder eine optische Anzeige erfolgen.

Aus der gattungsbildenden DE 197 39 357 A1 ist ein Datenein- und -ausgabegerät für ein Kraftfahrzeug bekannt. Dieses Gerät umfaßt ein oder mehrere Bedienelemente zum Steuern und Überwachen von mehreren im Kraftfahrzeug vorhandenen Funktionsmodulen. Es ist ein Bildschirm, eine Speichereinheit, sowie eine Prozessoreinheit vorhanden. In der Speichereinheit sind auf dem Bildschirm anzuzeigende grafische Elemente aufrufbar. Die Prozessoreinheit dient zur Darstellung der grafischen Benutzeroberfläche, zur Auswertung der Bedienelemente und zur Kommunikation mit den Funktionsmodulen. Ferner hat die Prozessoreinheit Zugriff auf die in der Speichereinheit abgelegten grafischen Elemente. Das Terminalmodul ist über eine elektrische Schnittstelle mit einem Bussystem verbunden, an dem ebenfalls die von dem Terminalmodul zu überwachenden bzw. zu steuernden Funktionsmodule angeschlossen sind.

Aus DE 198 18 262 ist ein Verfahren zum Betrieb bzw. zum Bedienen verschiedener Geräte in einem Kraftfahrzeug bekannt. Um mit einer zentralen Sprachbedien- bzw. Eingabeeinheit mit allen bedienfähigen Geräten unabhängig von deren jeweiligen Ausstattung kommunizieren zu können, ist erfindungsgemäß vorgeschlagen, das alle spracheingabegsteuerten Geräte zusammen mit mindestens einer Spracheingabe logisch untereinander kommunizierend verbunden sind. Die Funktions- und/oder Ausstattungsmerkmale jedes Gerätes sind von der Spracheingabeeinheit elektronisch selbsttätig abfragbar bzw. werden von jedem Gerät selbsttätig mitgeteilt.

EP 1 122 519 A ist Stand der Technik im Sinne des Artikels 54(3) EPÜ für Anspruch 1 für die Vertragstaaten, die in beiden Anmeldungen benannt worden sind, und offenbart ein Verfahren zur Bedienung einer Multimediaeinheit in einem Kraftfahrzeug, wobei sämtliche Funktionen von Bedienbefehlen im Kraftfahrzeug, welche von einem Fahrer des Kraftfahrzeugs eingegeben werden, menügesteuert über die Multimediaeinheit ausführbar sind, alle Bedienbefehle von der Multimediaeinheit kontinuierlich gespeichert werden, die eingegebenen Bedienbefehle nach ihrer Häufigkeit der Eingabe sortiert werden und diejenigen Bedienbefehle in der Menühierarchie an oberster Stelle plaziert werden, welche am häufigsten ausgeführt werden.

Aufgabe der Erfindung ist es, eine individuelle sich automatisch an den jeweiligen Fahrer, dessen häufigste Bedieneingaben und dem jeweiligen Fahrzeugzustand orientierende Bedieneingabe für eine Multimediaeinheit und ein Verfahren zum Betrieb einer Multimediaeinheit aufzuzeigen.

Diese Aufgabe wird anhand der Merkmale der Ansprüche 1 und 6 gelöst. Weitere vorteilhafte Ausgestaltungen der Erfindung ergeben sich anhand der abhängigen Ansprüche und der weiteren Beschreibung nebst zugehörigen Figuren.

Eine Multimediabedieneinheit hat die Aufgabe, verschiedenste vorhandene und in das System eingekoppelte Multimediakomponenten zu bedienen. So sind in Multimediakomponenten beispielsweise Radio, TV-Empfang, visuelle Darstellung, Audiowiedergabe, Navigationssystem, Darstellung von

Fahrzeugparametem wie z. B. die Anzeige der Durchschnittsgeschwindigkeit, der Öltemperatur, der geöffneten Fahrzeugtüren usw. sowie Verkehrsfunkleitinformationen und eine Telefoneinheit integriert. Um die einzelnen Komponenten über eine zentrale Eingabeeinheit zu bedienen, muß sich der Fahrer entweder konventionell über eine Menüstruktur zu den einzelnen Funktionen in der Menüstruktur durchsuchen oder aber er bedient speziell an den einzelnen Einheiten angeordnete Bedieneinheiten bzw. - elementen. Bei der Erfindung werden die einzelnen durch den Fahrer ausgewählten Eingaben, welche durch Menüpunkte gespeichert und nach der Häufigkeit ihrer Bedienung bewertet. So hat jeder einzelne Fahrer eine typische und spezifische Wunscheinstellung für im Fahrzeug angeordnete Multimediakomponenten über die Multimediaeinheit und der zugehörigen Bedieneinheit mit mindestens einer zugehörigen Taste, kann jede Funktion, welche im Fahrzeug auswählbar ist, angesteuert und ausgeführt bzw. überwacht werden Durch die Speicherung der Eingaben eines Fahrers in der Multimediaeinheit und die Überwachung sämtlicher weiterer Zustände des Fahrzeuges und des Bedieneinheiten, ergibt sich für jeden Fahrer und Beifahrer ein spezielles Nutzerprofil. Die Multimediaeinheit errechnet nunmehr statistisch im vornherein die von einem jeweiligen Fahrer häufigst betätigten Funktionen, und die häufigsten diesen Funktionen nachfolgend betätigten Funktionen. Öffnet beispielsweise ein Fahrer ein Fenster, und die Musikanlage ist in Betrieb, so wird er häufig die Lautstärke erhöhen, um den gleichen Lautstärkeeindruck und Hörgenuß zu haben, wie vorher. Gleiches ist der Fall, wenn das Gebläse im Kraftfahrzeug auf eine höhere Stufe eingestellt wird. In diesem Fall wird ebenfalls der Fahrer die Lautstärke der Musikanlage erhöhen. Die Multimediaeinheit analysiert die gesamten Bedieneingaben über den gesamten im Betrieb befindlichen Zeitraum und die Eingaben eines jeweiligen Fahrers und errechnet anhand der statistischen Wahrscheinlichkeit anhand der Häufigkeit der aufgetretenen Eingaben einer eingegebenen Funktionen eine nachfolgende Funktion, bzw. eines angeforderten Service, einen nachfolgende Funktion, bzw. eine nachfolgend geforderten Service. Über einen Inkrementalzähler wird jede Bedienung und Eingabe des Fahrers von der Bedieneinheit erfaßt und in einem Speicher gespeichert, wobei der Speicher nach der Häufigkeit der Eingabeereignisse und Aktionsrate sortiert wird. Somit erhält die häufigst bediente Eingabefunktion die höchste Rangfolge im Speicher, wobei dieser dann jeweils nach Ihrer Häufigkeit aufgetretenen Nachfolgeeingaben zugewiesen werden. Im weiteren kann über eine Fortwerteinstellung festgelegt werden, welche weitere Funktion einem Fahrer sofort nach Durchführung einer Funktion ausschließlich angeboten wird. Dies ermöglicht somit eine logische und dem Fahrer entlastende Bedienung der Funktionen. Bedienfunktionen werden somit unmittelbar nach Auswahl eines Funktion dem Nutzer nach dessen sonstiger Auswahl angeboten, sortiert nach Eingabehäufigkeit. Weniger häufige Nutzungen werden in ihrer Gewichtung im Menü nach hinten gesetzt. Die Multimediaeinheit paßt sich damit an die Nutzungsgewohnheiten des Fahrers an und stellt jeweils häufig nacheinander folgende Funktionen bzw. Service bereit. Über einstellbare Settings kann die gespeicherte Bedienungsliste durch einen Fahrer verändert werden. Es besteht im weiteren die Möglichkeit, daß diese Settings unveränderbar sind oder auch über oben beschriebene Weise vom System selbst verändert werden.

Durch Vergabe einer Identifikation für jeden Fahrer kann jeweils einem Fahrer ein individueller Erfahrungswert zugewiesen werden, und diese Einstellungen können jeweils auf und für den aktuellen Fahrer vorgenommen werden. Dies hat zur Folge, daß eine ergonomische Nutzung der Multimediaeinheit möglich ist, wobei mittels nur noch eines einzigen Bedienelementes die entsprechenden auf die Häufigkeit abgestimmten Funktionen für die Bedieneinheit vorhanden und vorgewählt sind.

Dies ermöglicht es, häufig mittels nur einem einzigen Bedieneingabeelement weitere Funktionen in logischer Fortfolge durchzuführen, ohne daß der Fahrer dann in Untermenüpunkte wechseln muß. Dies ist insbesondere für die Fahrsicherheit von großem Nutzen. Wie bereits beschrieben, wird folglich nach öffnen des Fensters als nächste durchgeführte Funktion Erhöhung der Lautstärke angeboten. Wünscht der Nutzer diese Funktion nicht, so muß er sich über die Menüpunkte weiter an die gewünschte Funktionsposition auswählen.

Nach einer gewissen Zeitdauer, nach Ausführung einer Funktion, wird die vom Fahrer sonst ausgeführte nächste Funktion wieder gelöscht. Öffnet beispielsweise ein Fahrer ein Fenster und aktiviert nicht binnen 10 Sekunden die Lautstärke, so wird diese nachfolgende Default-Einstellung nach dem Fenster wieder von der Hauptfunktionstaste gelegt, so daß diese für weitere Funktionen vorhanden ist.

Durch die Erfassung der Häufigkeit der Funktionsauswahl einzelner Befehle aus dem gesamten Bedieneingabebefehl ergibt sich eine Menüstruktur, welche sich an der Bedieneigenart des Fahrers orientiert. Es wird somit zunächst die häufigste, dann die zweithäufigste, dritthäufigste, vierthäufigste usw. gewählte Funktion bzw. ausgewählter Service, den das System bieten kann, dem Fahrer vorgeschlagen, geordnet nach der "gewöhnlichen" Auswahl des Fahrers. Wünscht er diese Funktionen bzw. gebotenen Service nicht, so kann er über eine weitere Eingabetaste in das Normalmenü wechseln und sich die entsprechende Funktion auswählen. Diese erfolgt als Look-up-table.

Der Look-up-table hat besonders vorteilhaft eine service-orientierte Struktur anstelle einer geräteorientierten Struktur, da sich häufig sowohl unterschiedliche Geräte, wie auch Module, für gleiche oder vergleichbare Services eignen bzw. viele Geräte mehrere unterschiedliche Services bieten können. So kann z. B. ein Funkmodul, welches auf dem GSM-Standart basieren, sowohl für Sprachtelefonie als auch für das Versenden von kurzen, vorverfaßten Mitteilungen verwendet werden (Short Message Service). Es kann aber auch für Datenübertragung aus dem Internet oder zu Online-Navigation über entsprechende Serviceprovider oder als eigenständiger Datenkanal genutzt werden. Andererseits kann ein Navigationssystem auch offline über ein CD-Rom-Daten-basiertes autarkes Onboard-Navigationssystem gestützt sein. Es besteht auch die Möglichkeit, daß ein Service eines speziellen Genres von Musik, z. B. Klassik, über den FM-Radioempfang eines Brodcast-Senders, über DAB- oder auch DVB (T), über vergleichbare Brodcaster, über das Internet als Direktsendung, über das Internet aus einer wunschweise beziehbaren Datenkonserve, z. B. komprimiert nach MP3-Standart, aus einer Datenbank als Datenfile heruntergeladen werden kann. Selbiges kann aber auch von einem an Bord befindlichen Datenträger, z. B. einer Kompaktkassette in einem Kompaktkassettenlaufwerk, oder von einer Kompaktdisc in einem CD-Abspielgerät bezogen werden. Bei einem derartigen CD-Abspielgerät kann es sich um ein Singel-CD-Laufwerk oder einen CD-Wechsler handeln.

Service-orientierte Menüstruktur bedeutet hierbei, daß dem Nutzer des Multimediasystems primär der Service, z. B. Audio-Unterhaltung, Typ "Klassik", u. s. w. geboten wird, welchen er sonst üblich ermittelt über seine bisherigen Eingaben. Die Auswahl, über welches Medium der Service zur Verfügung gestellt werden soll, erfolgt erst sekundär entsprechend den Möglichkeiten des konkret vorhandenen Multimediasystems.

Ein anderer primär angebotener Service kann z. B. unter dem Begriff "Office" im Sinne von Büro-Service zusammengefaßt werden. Hierbei wird beispielsweise bei der Auswahl des Menüpunktes "Kontakt", neben weiteren Services wie "Kalender", ein bekannter Kontakt zur Wahl gestellt. Dieser Kontakt bezieht sich auf Personen oder Adressen, woraufhin nach Auswahl die Servicearten "Telefonkontakt", "SMS-Sendung", "E-mait-Sendung" (oder E-mail-Abfrage) oder auch "Navigation zur betreffenden Person/Adresse" zur Auswahl gestellt werden. Es erfolgt schließlich erst sekundär die Auswahl, der Bezug bzw. die Bedienung des Betreffenden zu nutzenden Moduls bzw. des Geräts innerhalb des vorhandenen Multimediasystems. Diese service-orientierte Menüstruktur hat verglichen mit einer konventionellen, geräte-orientierten Menüstruktur den besonderen Vorteil einer wesentlich stärkeren Netzzielorientierung und damit eine ergonomische durchgehende einheitliche Bedienmöglichkeit des Multimediasystems.

Als besonders vorteilhaft hat sich die Verwendung einer Bedieneinheit für die Multimediaeinheit ergeben, welche eine Auflageflächen für eine Hand aufweist und sich in zwei Teilbereiche gliedert. Bei der Handauflagefläche befinden sich Funktionselemente welche sich mit einem Teilbereich der Handballen und/oder mit dem Daumen bedienen lassen, in dem zweiten Teilbereich befindet sich Funktionselemente, welche von den Fingern der restlichen Hand betätigt werden können. Für jeden Finger sind jeweils zwei Tasten vorgesehen.

Diese Funktionselemente werden von der Bedieneinheit jeweils Funktionen zugewiesen.

Im weiteren wird die Funktion und Ausgestaltung der Erfindung anhand von Figuren und einem konkreten Ausführungsbeispiel näher erläutert.

Es zeigt:
Figur 1 eine perspektivische Draufsicht auf eine mögliche Realisierungsform der Bedieneinheit;
Figur 2 eine schematische Ausführungsform einer Multimediaeinheit, z.B. in einem Kraftfahrzeug.

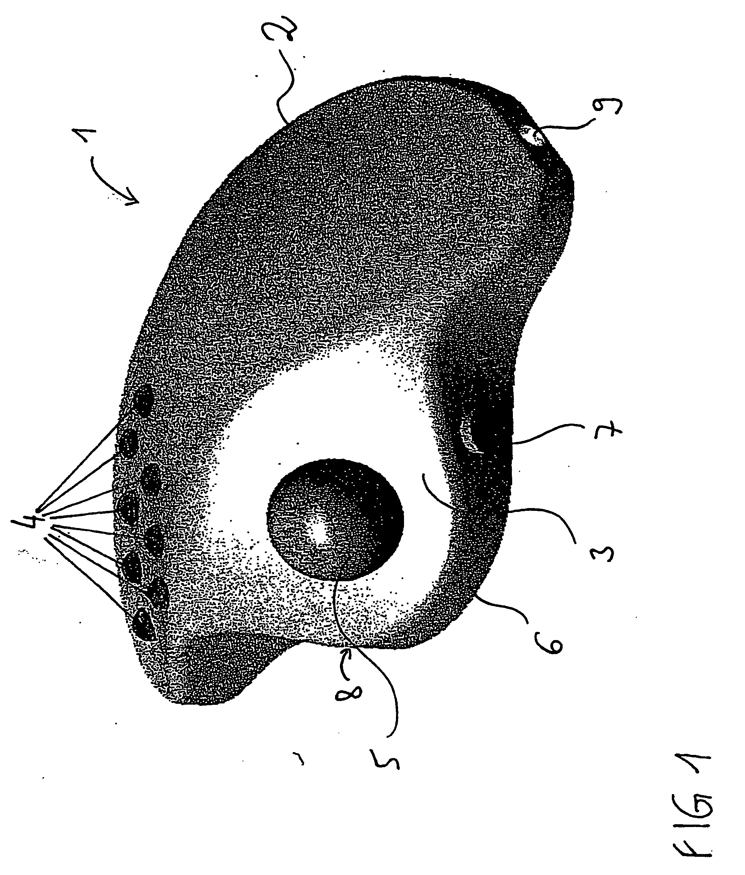

Figur 1 zeigt eine perspektivische Daraufsicht der Bedieneinheit 1, der Multimediaeinheit, insbesondere zum Einbau in ein Kraftfahrzeug. Die Bedieneinheit 1 weist auf der Oberseite eine Auflagefläche 2, 3 auf, auf welcher die Hand eines Fahrers zum Liegen kommt, während er am Steuer des Fahrzeugs sitzt und das Fahrzeug lenkt.

Die Bedieneinheit 1 ist vorteilhaft im Bereich zwischen den zwei Frontsitzen angeordnet, so daß ein Fahrer diese während der Fahrt mit seiner rechten Hand bedienen kann.

Die Oberseite der Bedieneinheit 1 ist konvex ausgestaltet, wodurch in ergonomischer Weise die Hand des Fahrers auf der Bedieneinheit 1 zur Ruhe kommt und die Auswölbung der Hand beim Auflegen auf die Auflagefläche 2, 3 berücksichtigt wird. In der Auflagefläche 2, 3 sind Eingabeeinheiten 4, 5, 6, 7, 8 vorgesehen. Für jeweils einen Finger der Hand ist jeweils mindestens eine Tastenreihe vorhanden.

Im weiteren weist die Bedieneinheit 1 eine Schnittstelle auf, über welche diese mit der Multimediaeinheit in Verbindung steht.

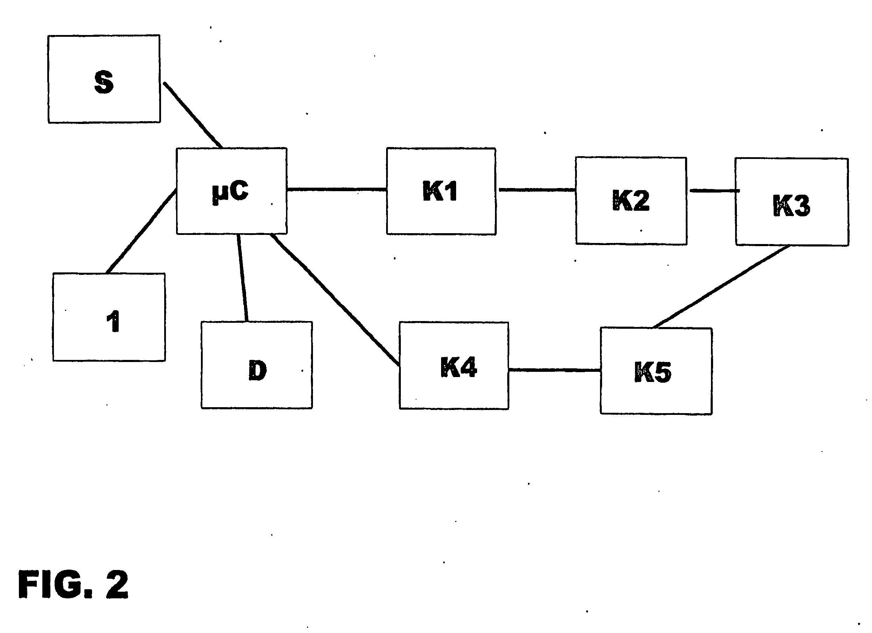

In Figur 2 ist eine beispielhafte Ausführungsform für die Multimediaeinheit dargestellt. Die Bezugszeichen aus Figur 1 wurden in Figur 2, soweit zum Verständnis erforderlich, übernommen. Diese Multimediaeinheit weist eine Mikrocomputereinheit µC, eine mit dieser verbundenen Speichereinheit S, sowie die Bedieneinheit 1 und eine Anzeigeeinheit D auf. Die Bedieneinheit 1 entspricht der Bedieneinheit 1 aus Figur 1. Die Bedieneinheit 1 und die Anzeigeeinheit D sind mit der Mikrocomputereinheit µC verbunden. Im weiteren ist an der Mikrocomputereinheit µC eine Vielzahl von Komponenten K1 bis K5 angeschlossen. Bei K1 handelt es sich beispielsweise um eine Audioeinheit, bei K2 um eine TV-Einheit, bei K3 um eine Telefoneinheit, bei K4 um ein Navigationssystem und bei K5 um ein Klimagerät. Im Ausführungsbeispiel sind die Komponenten K1 bis K5 über einen Ringbus, insbesondere einen MOST-Bus oder einer anderen Busarchitektur, wie beispielweise einem Fire-Wire-Bus, mit der Mikrocomputereinheit µC verbunden. Es besteht auch die Möglichkeit, die Bedieneinheit 1 und die Displayeinheit D in diesen Ringbus zu integrieren.

Die Multimediaeinheit ist außerdem über ein Interface an den Datenbus des Fahrzeugs angeschlossen. Über diesen Datenbus kann über die Multimediaeinheit auf Funktionen, insbesondere Bedienfunktionen des Fahrzeuges, zugegriffen werden. Die Multimediaeinheit erkennt über diesen Datenbus, ob etwa ein Fahrer ein Fenster öffnet, z. B. über einen Fensterheber, oder ob andere Funktionen von einem Fahrer über andere Bedienelemente ausgewählt und ausgeführt werden. Alle diese Funktionen, ausgenommen sicherheitsrelevante Funktionen, können auch als Untermenüpunkte über die Bedieneinheit 1 der Multimediaeinheit ausgewählt und ausgeführt werden.

Als besonders vorteilthaft hat sich hierbei ergeben, die Fensterheber zu steuern. Es kann ausgewählt und eingestellt werden, wieviel Prozent ein Fenster geöffnet werden soll. Die Multimediaeinheit errechnet dann aus der Dauer des Vorgangs des gesamten Öffnens eines Fensters die Ansteuerzeit für den Elektromotor des Fensterhebers damit der eingegebene prozentuale Wert zur Öffnung des Fensters umgesetzt wird.

Die Mikrocomputereinheit µC wertet die Eingaben, welche ein Fahrer über die Bedieneinheit 1 tätigt, aus und steuert die entsprechenden Komponenten K1 bis K5. Die Mikrocomputereinheit µC speichert in der Speichereinheit S sämtliche Eingaben, welche ein Fahrer über die Bedieneinheit 1 tätigt und legt diese nach Häufigkeit und nach Fahrer, welchem jeweils eine Identifikation zugewiesen ist, ab. Auf der Anzeigeeinheit D stellt die Mikrocomputereinheit µC die einzelnen auswählbaren Funktionen der Multimediaeinheit in Menü-Funktionsweise zur Auswahl über die Bedieneinheit 1 dar. Über die Eingabeeinheiten 4, 5, 6, 7, 8 der Bedieneinheit 1 steuert der Fahrer die Funktion der gesamten Multimediaeinheit. Die Mikrocomputereinheit µC weist diesen einzelnen Eingabeeinheiten 4, 5, 6, 7, 8 der Bedieneinheit 1, in Abhängigkeit der Menüsteuerung, Funktionen zu. So ist beispielsweise die häufigst betätigte Funktion eines Fahrers die dem Zeigefinger zugeordnete Eingabeeinheit 5 der Bedieneinheit 1. Daher wird die Mikrocomputereinheit µC stets die vom Fahrer häufigst betätigten Funktionen auf diese Eingabeeinheit legen.

Benutzt aber ein Fahrer häufigst nur die Eingabeeinheiten 4 welche dem Daumen zugeordnet ist, so wird die Mikrocomputereinheit µC, über die stochastische Auswertung in der Speichereinheit S abgespeicherten Benutzungsdaten des jeweiligen Fahrers, die häufigst betätigten Funktionen auf diese Eingabeeinheit legen.

Die Mikrocomputereinheit µC wertet die Eingabe- und Benutzungstätigkeit eines Fahrers aus und legt in der Speichereinheit S ein Profil für jeden Fahrer ab. Dieses Profil gibt Auskunft über die Häufigkeit der betätigten Funktionen und Bedieneingaben des Fahrers und über die benutzten Eingabeeinheiten 4, 5, 6, 7, 8 der Bedieneinheit 1, stochastisch über deren Wahrscheinlichkeit der Auswahl geordnet. Nutzt beispielsweise ein Fahrer sehr häufig die Navigation, so wird Navigationsauswahl auf die von ihm jeweils häufigst betätigte Eingabeeinheit der Bedieneinheit 1 gelegt. Dies erfolgt individuell für jeden Fahrer eine fahrer-spezifische Zuweisung und zugleich eine individuelle und intuitive Zuordnung einzelner Menüpunkte für jeden Fahrer.
Um dies nochmals zu verdeutlichen, wird dies an einem weiteren Beispiel erläutert. Ein Fahrer betätigt sehr häufig während der Fahrt die Telekommunikationseinheit K2. Dies wird in durch die Mikrocomputereinheit µC erkannt und über die Fahrer-Identifikation gespeichert. Steigt ein Fahrer in das Fahrzeug ein und dessen Identifikation wird erkannt, so wird von der Mikrocomputereinheit µC die Funktionsauswahl, d. h. die Menüsteuerung entsprechend angepaßt. Betätigt ein Fahrer beispielsweise sämtliche Funktionen fast ausschließlich mit dem Zeigefinger, wird die Mikrocomputereinheit µC die Menüsteuerung, intuitiv angepaßt auf den Fahrer, auf die Eingabeeinheit 5, welche dem Zeigefinger zugewiesen ist, auslegen. Es wird die Auswahl der Telekommunikationseinheit K2 auf die entsprechende Eingabeeinheit 5 der Bedieneinheit 1 gelegt. Der Fahrer wird sich hierauf unmittelbar sofort einstellen und weiß, daß er mit der Zeigefingereinheit die Telekommunikationseinheit K2 betätigt. Im weiteren erfaßt die Mikrocomputereinheit µC die Häufigkeit der ausgewählten Fünktionen-Auswahl von Menüpunkten. Wählt ein Fahrer sehr häufig eine bestimmte Telefonnummer aus, so legt die Mikrocomputereinheit µC nach Auswahl des der Telekommunikationseinheit K2 die Anwahl der häufigsten Telefonnummern auf die häufigst vom Fahrer benutzte Eingabeeinheit 5 der Bedieneinheit 1. Der Fahrer weiß somit intuitiv, daß auf einer entsprechenden Eingabeeinheit 5 der Bedieneinheit 1, nach Auswahl der Telekommunikationseinheit K2, die von ihm häufigst gewählte Telefonnummer liegt. Die zweithäufigst gewählte Telefonnummer wird auf eine andere der Eingabeeinheit 5, 4 verlagert, so daß er dies ebenfalls intuitiv weiß. Somit muß der Fahrer nicht mehr seinen Blick von der Straße nehmen und kann sofortig weitere, einer ausgewählten Funktion nachfolgenden Unterfunktionen auswählen und ausführen.

Im weiteren wird die Funktionsweise der Multimediaeinheit nochmals anhand eines weiteren Beispiels verdeutlicht. Ein Fahrer hört vorzugsweise im Fahrzeug eine gewisse definierte akustische Audioeinstellung. Im weiteren hört er vorzugsweise in einem gewissen Sendegebiet einen gewissen Sender. Dies erfaßt die Mikrocomputereinheit µC durch statistische und stochastische Auswertung der Benutzungslage des jeweiligen Fahrers über einen Zeitraum und speichert diese in der Speichereinheit S ab. Bewegt sich ein Fahrer mit dem Fahrzeug, in welchem die erfindungsgemäße Multimediaeinheit eingebaut ist, beispielsweise in Bayern und hört dort meist einen gewissen Sender, wie beispielsweise BR3, so wird die Mikrocomputereinheit µC zunächst bei Erkennen des Fahrers und Inbetriebnahme des Fahrzeugs den Standort des Fahrzeuges über die Navigationseinheit K4, bzw. deren GPS-Einheit, ermitteln, aus der Speichereinheit S die dem Fahrer zugeordneten Daten auslesen und versuchen den von ihm häufigst gewählten Sender einzustellen und die Wiedergabeparameter auf die zum Fahrer gespeicherten Daten anpassen.

Fährt nunmehr der Fahrer mit dem Fahrzeug los und öffnet ein Fenster und erhöht er die Lautstärke, um die Außengeräusche zu übertönen, so speichert dies die Mikrocomputereinheit µC diese Funktionsfolge in der Speichereinheit S. Im folgenden wird die Mikrocomputereinheit µC anhand dieser Eingaben "wissen", daß der Fahrer bei öffnen des Fensters die Lautstärke um ein gewisses Maß erhöht, wie dies von der Mikrocomputereinheit µC erfaßt und in der Speichereinheit S gespeichert wird. Wird der Fahrer nunmehr bei einer weiteren Nutzung zu einem späteren Zeitpunkt mit dem Fahrzeug fahren und das Fenster öffnen, so wird die Mikrocomputereinheit µC entweder automatisch die Lautstärke erhöhen, oder auf die vom Benutzer häufigst betätigte Taste die Funktion "Lautstärke erhöhen" legen. Im Fall, daß die Funktion nicht automatisch ausgeführt wird, wird ein Zeitglied aktiviert, welches für einen definierten voreingestellten Zeitraum, beispielsweise für 10 Sekunden, aktiv ist. Betätigt innerhalb dieses Zeitfensters der Fahrer diese Funktion über eine der Eingabeeinheiten 4, 5, 6, 7, 8, der Bedieneinheit 1, so wird die Lautstärke entsprechend erhöht. Betätigt er dies nicht, so wird die Lautstärke nicht verändert. Dies wird dann aber wiederum Einfluß auf die weitere Ausgestaltung der stochastischen Häufigkeit führen. Macht ein Fahrer dieses mehrmals, d. h. daß er mehrmals trotz öffnen Fensters die Lautstärke nicht erhöht, so wird dies die Mikrocomputereinheit µC erfassen, in der Speichereinheit S abspeichem und sich die Häufigkeit der Funktionen nachfolgend nach einer ausgeführten Funktion verändern; die Daten zum Fahrer werden dann entsprechend angepaßt. Bei öffnen eines Fensters während der Fahrt wird dann unmittelbar nach öffnen des Fensters die Funktion Lautstärke nicht mehr direkt angeboten.

In einer weiteren vorteilhaften Ausführung der Erfindung ist die Bedieneinheit 1 direkt am Lenkrad des Fahrzeuges angebracht. Dies ermöglicht es dem Fahrer, ohne Wegnahme seiner Hand vom Lenkrad, die Bedieneinheit 1 zu betätigen. Dies führt zu einer weiteren Erhöhung der Verkehrssicherheit. Die am Lenkrad befestigte Bedieneinheit 1 steht mit der Mikrocomputereinheit µC des Multimediasystems entweder leitungsgebunden, verbunden über ein Kabel über das Lenkrad und die Lenkradsäule, mit dieser in Verbindung oder aber die Verbindung folgt drahtlos, beispielsweise infrarot oder über Blue-Tooth.

In einer weiteren vorteilhaften Ausgestaltung der Erfindung ist die Speichereinheit S als wechselbarer Speicher ausgestaltet. Dies ermöglicht es, daß ein Fahrer bei einem Fahrzeugwechsel seine Benutzerdaten mitnehmen kann und in jedem weiteren Fahrzeug mit einer erfindungsgemäßen Multimediaeinheit nutzen kann. Die Speichereinheit S ist in vorteilhafter Weise z.B. als Multimediakarte oder Chip-Karte ausgebildet.

## Patentansprüche

1. Verfahren zur Bedienung einer Multimediaeinheit in einem Kraftfahrzeug wobei sämtliche Funktionen von Bedienbefehlen im Kraftfahrzeug, welche von einem Fahrer des Kraftfahrzeugs eingegeben werden, menügesteuert über die Multimediaeinheit ausführbar sind, **dadurch gekennzeichnet, dass** alle Bedienbefehle von der Multimediaeinheit kontinuierlich gespeichert werden, die eingegebenen Bedienbefehle nach ihrer Häufigkeit der Eingabe sortiert werden und diejenigen Bedienbefehle in der Menühierarchie an oberster Stelle platziert werden, welche am häufigsten ausgeführt werden, und
zu ersten Menüpunkten zweite und weitere nachfolgende Menüpunkte zugeordnet werden, die als Funktion ihrer Häufigkeit nachfolgend zu dem jeweiligen ersten Menüpunkt vom Fahrer betätigt werden.

2. Verfahren nach Anspruch 1, **dadurch gekennzeichnet, dass** die Menüsteuerung in Form von Look-up-tables durchgeführt wird.

3. Verfahren nach einem oder mehreren der vorangehenden Ansprüche, **dadurch gekennzeichnet, dass** über die Auswahl von Menüpunkten Funktionen des Kraftfahrzeugs und/oder Komponenten desselben und/oder Komponenten der Multimediaeinheit ausführbar sind.

4. Verfahren nach einem oder mehreren der vorangehenden Ansprüche, **dadurch gekennzeichnet, dass** die häufigst benutzten Bedienbefehle direkt Ausführungsauswahlelementen zugewiesen werden und diese Ausführungsauswahlelemente als Taster realisiert werden.

5. Verfahren nach einem der vorangegangenen ansprüche, **dadurch gekennzeichnet, dass** jedem Fahrer eine Identifikation zugewiesen wird und die Häufigkeit sämtlicher Eingaben eines Fahrers unter dieser Identifikation erfasst werden.

6. Multimediaeinheit bestehend aus mindestens einer Bedieneinheit (1), mit Eingabeeinheiten (4, 5, 6, 7, 8), einer Mikrocomputereinheit (µC), einer Speichereinheit (S) und einer Anzeigeeinheit (D), zur Bedienung von mindestens einer an der Multimediaeinheit angeordneten Komponente (K1, K2. K3, K4, K5), wobei die Steuerung der Multimediaeinheit durch einen Nutzer über die Bedieneinheit (1) erfolgt und die Multimediaeinheit über ein Interface an den Datenbus eines Kraftfahrzeuges angeordnet ist und über diesen Datenbus die Multimediaeinheit weitere Bedienfunktionen des Kraftfahrzeuges steuert bzw. Eingaben dieser Bedieneinheiten erfaßt und die Steuerung der Multimediaeinheit über eine Menüführung mittels Menüpunkten zur Auswahl auf der Anzeigeeinheit (D) erfolgt und dargestellt ist,
**dadurch gekennzeichnet, dass**
die Mikrocomputereinheit (uC) alle Eingaben eines Nutzers im Kraftfahrzeug in der Speichereinheit (S) speichert, die Mikrocomputereinheit (uC) die Eingaben nach Häufigkeit der Nutzung sortiert und diejenigen Funktionen, welche am häufigsten bedient werden, in der Menühierarchie hoch ansiedeln und die am häufigsten genutzten Funktionen direkt eine der Eingabeeinheiten (4, 5, 6, 7, 8) der Bedieneinheit zuweist.

7. Multimediaeinheit nach Anspruch 6, **dadurch gekennzeichnet, dass** die Bedieneinheit (1), die Mikrocomputereinheit (µC), die Komponenten (K1, K2, K3, K4, K5) und die Anzeigeeinheit (D) über einen Bus miteinander verbunden sind.

8. Multimediaeinheit nach Anspruch 6 oder 7, **dadurch gekennzeichnet, dass** die erste Komponente (K1) eine Audioeinheit, die zweite Komponente (K2) eine TV-Einheit, die dritte Komponente (K3) eine Telefoneinheit, insbesondere eine GSM-Einheit, die vierte Komponente (K4) eine Navigationseinheit und die fünfte Komponente (K5) eine Klimatisierungseinheit ist.

9. Multimediaeinheit nach einem oder mehreren der Ansprüche 6 bis 8, **dadurch gekennzeichnet, dass** die Eingabeeinheiten (4, 5, 6, 7, 8) der Bedieneinheit (1) jeweils mindestens eine Taste oder eine Tastenreihe ist und/oder die Multimediaeinheit eine Schnittstelle aufweist, über welche die Bedieneinheit (1) angeschlossen ist und/oder die Multimediaeinheit über einen Ringbus, insbesondere einem MOST- oder Fire-Wire-Bus, mit den Komponenten (K1, K2, K3, K4, K5), der Anzeigeeinheit (D) und der Bedieneinheit (1) verbunden ist.

10. Multimediaeinheit nach einem oder mehreren der Ansprüche 6 bis 9, **dadurch gekennzeichnet, dass** die Speichereinheit (S) wechselbar ist, die Speichereinheit (S) eine Multimediakarte oder eine Chip-Karte ist.

11. Multimediaeinheit nach einem oder mehreren der Ansprüche 6 bis 10, **dadurch gekennzeichnet, dass** die Menüstruktur primär service-orientiert aufgebaut und ausgerichtet ist und erst sekundär, falls notwendig, auf zur individuellen Auswahl gestellte, entsprechend der vorhandenen Systemkonstellation vorhandenen Komponenten (K1, K2, K3, K4, K5) den Zugriff ermöglicht.

## Claims

1. Method for operating a multimedia unit in a motor vehicle, all functions associated with operating commands in the motor vehicle, which are input by a driver of the motor vehicle, being able to be executed under menu control using the multimedia unit, **characterized in that** all of the operating commands are continuously stored by the multimedia unit, the operating commands which have been input are sorted in accordance with the frequency with which they are input, those operating commands which are executed most frequently are placed at the very top of the menu hierarchy, and second and further subsequent menu items which are activated by the driver as a function of their frequency after the respective first menu item are assigned to first menu items.

2. Method according to Claim 1, **characterized in that** menu control is carried out in the form of look-up tables.

3. Method according to one or more of the preceding claims, **characterized in that** functions of the motor vehicle and/or components of the latter and/or components of the multimedia unit can be executed by selecting menu items.

4. Method according to one or more of the preceding claims, **characterized in that** the most frequently used operating commands are directly assigned to execution selection elements and these execution selection elements are implemented in the form of pushbuttons.

5. Method according to one of the preceding claims, **characterized in that** each driver is assigned an identification and the frequency of all inputs by a driver under this identification is detected.

6. Multimedia unit comprising at least one operating unit (1) having input units (4, 5, 6, 7, 8), a microcomputer unit (uC), a memory unit (S) and a display unit (D) for operating at least one component (K1, K2, K3, K4, K5) which is arranged on the multimedia unit, a user using the operating unit (1) to control the multimedia unit, and the multimedia unit being arranged on the data bus of a motor vehicle via an interface, and the multimedia unit using this data bus to control further operating functions of the motor vehicle and to detect inputs of these operating units, and control of the multimedia unit being effected and shown using menu guidance by means of menu items which can be selected on the display unit (D),
**characterized in that**
the microcomputer unit (uC) stores all of the inputs by a user in the motor vehicle in the memory unit (S), the microcomputer unit (uC) sorts the inputs in accordance with the frequency with which they are used, places those functions which are operated most frequently high in the menu hierarchy and directly assigns the most frequently used functions to one of the input units (4, 5, 6, 7, 8).

7. Multimedia unit according to Claim 6, **characterized in that** the operating unit (1), the microcomputer unit (uC), the components (K1, K2, K3, K4, K5) and the display unit (D) are connected to one another via a bus.

8. Multimedia unit according to Claim 6 or 7, **characterized in that** the first component (K1) is an audio unit, the second component (K2) is a TV unit, the third component (K3) is a telephone unit, in particular a GSM unit, the fourth component (K4) is a navigation unit and the fifth component (K5) is an air-conditioning unit.

9. Multimedia unit according to one or more of Claims 6 to 8, **characterized in that** the input units (4, 5, 6, 7, 8) of the operating unit (1) are each at least one button or a row of buttons, and/or the multimedia unit has an interface, via which the operating unit (1) is connected, and/or the multimedia unit is connected to the components (K1, K2, K3, K4, K5), to the display unit (D) and to the operating unit (1) via a ring bus, in particular a MOST or FireWire bus.

10. Multimedia unit according to one or more of Claims 6 to 9, **characterized in that** the memory unit (S) can be interchanged, and the memory unit (S) is a multimedia card or a chip card.

11. Multimedia unit according to one or more of Claims 6 to 10, **characterized in that** the menu structure is primarily designed and intended to be service-oriented and only secondarily, if necessary, makes it possible to access components (K1, K2, K3, K4, K5) which are provided for individual selection and are present in accordance with the existing system configuration.

## Revendications

1. Procédé pour commander un ensemble multimédia dans un véhicule automobile, toutes les fonctions des instructions de commande dans le véhicule automobile qui sont saisies par un conducteur du véhicule automobile pouvant être exécutées par le biais de l'ensemble multimédia en étant commandées par des menus, **caractérisé en ce que** l'ensemble multimédia enregistre continuellement toutes les instructions de commande, trie les instructions de commande saisies d'après leur fréquence de saisie et place au point le plus haut de la hiérarchie des menus les instructions de commande qui sont exécutées le plus souvent et les deuxièmes lignes de menu et suivantes sont associées aux premières lignes des menus, lesquelles sont actionnées par le conducteur à chaque fois à la suite de la première ligne de menu en fonction de leur fréquence.

2. Procédé selon la revendication 1, **caractérisé en ce que** la commande par menu est réalisée sous la forme de tableaux à consulter.

3. Procédé selon une ou plusieurs des revendications précédentes, **caractérisé en ce que** les fonctions du véhicule automobile et/ou des composants de celui-ci et/ou des composants de l'ensemble multimédia peuvent être exécutées en sélectionnant des lignes de menu.

4. Procédé selon une ou plusieurs des revendications précédentes, **caractérisé en ce que** des éléments de sélection d'exécution directe sont affectés aux instructions de commande les plus fréquemment utilisées et ces éléments de sélection d'exécution directe sont réalisés sous la forme de touches.

5. Procédé selon une ou plusieurs des revendications précédentes, **caractérisé en ce qu'**une identification est associée à chaque conducteur et la fréquence de toutes les saisies d'un conducteur est détectée dans le cadre de cette identification.

6. Ensemble multimédia composé d'au moins une unité de commande (1), comprenant des unités de saisie (4, 5, 6, 7, 8), une unité à microprocesseur (uC), une unité de mémoire (S) et une unité d'affichage (D) pour commander au moins un composant (K1, K2, K3, K4, K5) monté sur l'ensemble multimédia, la commande de l'ensemble multimédia par un utilisateur s'effectuant par le biais de l'unité de commande (1) et l'ensemble multimédia étant disposé sur le bus de données d'un véhicule automobile par le biais d'une interface et, par le biais de ce bus de données, l'ensemble multimédia commandant d'autres fonctions de commande du véhicule automobile ou acquiévant les saisies de ces unités de commande et la commande de l'ensemble multimédia s'effectuant par le biais d'un menu de guidage au moyen de lignes de menu à sélectionner et étant affichée sur l'unité d'affichage (D), **caractérisé en ce que** l'unité à microprocesseur (uC) enregistre toutes les saisies d'un utilisateur dans le véhicule automobile dans l'unité de mémoire (S), l'unité à microprocesseur (uC) trie les saisies d'après la fréquence d'utilisation et place haut dans la hiérarchie des menus les fonctions qui sont utilisées le plus fréquemment et affecte les fonctions les plus fréquemment utilisées directement à l'une des unités de saisie (4, 5, 6, 7, 8) de l'unité de commande.

7. Ensemble multimédia selon la revendication 6, **caractérisé en ce que** l'unité de commande (1), l'unité à microprocesseur (uC), les composants (K1, K2, K3, K4, K5) et l'unité d'affichage (D) sont reliés entre eux par le biais d'un bus.

8. Ensemble multimédia selon la revendication 6 ou 7, **caractérisé en ce que** le premier composant (K1) est une unité audio, le deuxième composant (K2) une unité de télévision, le troisième composant (K3) une unité de téléphonie, notamment une unité GSM, le quatrième composant (K4) une unité de navigation et le cinquième composant (K5) une unité de climatisation.

9. Ensemble multimédia selon une ou plusieurs des revendications 6 à 8, **caractérisé en ce que** les unités de saisie (4, 5, 6, 7, 8) de l'unité de commande (1) sont à chaque fois au moins une touche ou une rangée de touches et/ou l'ensemble multimédia présente une interface par le biais de laquelle est raccordée l'unité de commande (1) et/ou l'ensemble multimédia est relié avec les composants (K1, K2, K3, K4, K5), l'unité d'affichage (D) et l'unité de commande (1) par le biais d'un bus en anneau, notamment un bus MOST ou Fire-Wire.

10. Ensemble multimédia selon une ou plusieurs des revendications 6 à 9, **caractérisé en ce que** l'unité de mémoire (S) est interchangeable, l'unité de mémoire (S) est une carte multimédia ou une carte à puce.

11. Ensemble multimédia selon une ou plusieurs des revendications 6 à 10, **caractérisé en ce que** la structure de menu est initialement constituée et configurée en mettant l'accent sur le service et ne permet qu'en second lieu, si nécessaire, d'accéder aux composants (K1, K2, K3, K4, K5) proposés à la sélection individuelle et présents en fonction de la constellation existante du système.
